# FASCICULE DE BREVET EUROPEEN

(11) **EP 3 262 957 B1**
(45) Date de publication et mention de la délivrance du brevet: **20.03.2019**
(21) Numéro de dépôt: 17177761.8
(22) Date de dépôt: 26.06.2017
(51) Int. Cl.: A23L 3/015

(54) **PROCÉDÉ DE TRAITEMENT À HAUTE PRESSION POUR PRODUITS ALIMENTAIRES COMPORTANT UN ASSORTIMENT D'INGRÉDIENTS**
HOCHDRUCKBEHANDLUNG VON LEBENSMITTELN ENTHALTEND EINE KOMPONENTENKOMBINATION
HIGH PRESSURE TREATMENT OF FOODSTUFF COMPRISING AN ASSORTMENT OF INGREDIENTS

(30) Priorité: 27.06.2016 CH 8162016
(43) Date de publication de la demande: 03.01.2018
(73) Titulaire: Estavayer Lait SA, 1470 Estavayer-le-Lac (CH)
(72) Inventeur: DESCAMPS, Alexandre, 01220 Divonne les bains (FR); GIAVEDONI, Paola, 01220 Divonne les bains (FR); ROBIN, Matthew, 3280 Morat (CH)
(74) Mandataire: Schneiter, Sorin

(56) Documents cités:
- EP-A2- 1 219 184
- JP-A- H0 436 175
- US-A1- 2016 143 307
- DATABASE EPODOC [Online] EUROPEAN PATENT OFFICE, THE HAGUE, NL; 15 juillet 2016 (2016-07-15), anonymous: "METHOD FOR PREPARATION OF THE EGG OMELET WITH CHEESE OF THE LONG SHELF LIFE", XP002773827,accession no. UA-201402723-U Database accession no. UA-201402723-U & UA 94 214 U (UNIVERSITE NATIONALE D'ECONOMIE ET DE COMMERCE DONETSK) 10 novembre 2014 (2014-11-10)
- DATABASE WPI Week 201135 Thomson Scientific, London, GB; AN 2011-F22386 XP002773033, -& CN 101 999 732 A (UNIV ZHEJIANG) 6 avril 2011 (2011-04-06)

## Description

### Domaine technique

La présente invention concerne un procédé de traitement par pascalisation d'un produit alimentaire ainsi que le produit obtenu par ce traitement.

### Etat de la technique et problèmes à l'origine de l'invention

La pascalisation ou l'application de hautes pressions est une technique consistant à soumettre des produits alimentaires à des pressions élevées, de l'ordre de 2'000 à 10'000 bars. Ce traitement est également appelé "pasteurisation à froid", car il permet généralement de prolonger la durée de conservation des aliments en raison de la diminution de la flore bactérienne présente dans l'aliment. Un des avantages de la pascalisation est le fait qu'il permet de conserver les propriétés nutritionnelles essentielles du produit. Parmi les inconvénients, l'on peut mentionner que ce type de traitement peut entraîner une modification de la couleur et des propriétés organoleptiques du produit.

Dans la pratique, pour être sensible à ce traitement, l'aliment est enfermé, de préférence sous vide, dans un emballage souple. Ensuite, le produit est immergé dans un liquide, généralement de l'eau, dans une enceinte adaptée à la haute pression. A l'aide d'une pompe à haute pression, le liquide est compressé, ce qui engendre l'application d'une pression isostatique, qui agit sur le produit.

Dans les débuts, la pascalisation a été utilisée principalement pour augmenter la durée de vie des boissons, tels que les jus de fruits, mais aujourd'hui d'autres produits alimentaires, par exemple la viande, les poissons, les confitures et autres sont soumis à ces traitements. Il convient de relever que tous les produits alimentaires ne supportent pas la haute pression. Par exemple, certains aliments solides perdent leur consistance et ainsi leur aspect visuel et leurs propriétés organoleptiques en raison de la pression subie lors du traitement.

Au niveau cellulaire et moléculaire, le traitement par haute pression modifie la structure des protéines et les membranes cellulaires, ce qui cause la mortalité bactérienne. La pression entre 30 et 50 MPa peut aussi affecter certaines réactions moléculaires comme l'expression génétique et la synthèse protéique. La plupart des bactéries sous forme végétative sont inactivées par des pressions entre 400 et 600 MPa (4'000-6'000 bar), et des pressions supérieures à 1'000 MPa sont nécessaires pour détruire les spores bactériennes. D'autre part, un traitement entre 50 et 300 MPa peut induire la germination de spores.

Au jour d'aujourd'hui, on ne connait pas très bien l'effet de la pascalisation sur un produit alimentaire composé de plusieurs ingrédients différents, par exemple un produit comportant des ingrédients solides et liquides. D'autre part, l'effet de ce traitement sur un produit lacté, par exemple comportant des bactéries lactiques vivantes, n'est pas documenté. Dans certains produits lactés, la présence de bactéries vivantes peut être considérée comme avantageuse, en raison des propriétés organoleptiques conférées par ces dernières. La pascalisation, connue pour son effet bactéricide, ne semble à priori pas appropriée pour le traitement de produits lactés.

Un objectif de la présente invention est de trouver d'autres applications pour la pascalisation. Un autre objectif de l'invention est d'évaluer l'effet de la pascalisation sur des produits comprenant un assortiment d'ingrédients et encore sur des produits lactés. Par exemple, les présents inventeurs cherchent à connaître les effets interdépendants entre des divers ingrédients lors d'un traitement en haute pression.

Il est également un objet de l'invention d'évaluer si la pascalisation a des effets indésirables sur les propriétés gustatives de certains produits alimentaires, tels les produits lactés, en particulier les fondues prêtes à être utilisées. Dans cette optique, les présents inventeurs cherchent à connaître les interactions entre divers fromages, et optionnellement le vin et la fécule, présents dans une fondue prête à être utilisée.

La demande internationale WO2015/7198359 divulgue un procédé pour la fabrication de la mozzarella au lait de bufflonne, comportant une étape de traitement du fromage emballé par une pression de 5'000 bar pendant trois minutes ou de 6'000 bars pendant deux minutes. Clairement, des pressions plus élevées sont appliquées pour une durée relativement courte, probablement pour ne pas porter atteinte la constitution de la mozzarella.

La demande internationale WO 03/003845 divulgue un procédé de pasteurisation de produits laitiers, en particulier d'un fromage composé de mascarpone et de gorgonzola, selon lequel le produit est exposé à une pression entre 4000 à 6000 bars pendant 1 à 10 minutes, de préférence 2 à 4 minutes.

La demande internationale WO 2004/045295 divulgue une méthode pour retarder la métabolisation de la caséine intacte dans un fromage, dans laquelle le fromage est exposé à une pression de 400 à 800 MPa (4'000 à 8000 bars) pendant environ 5 minutes.

Le document UA94214U divulgue un procédé pour la préparation d'une omelette comportant un traitement à haute pression et à haute température (121-132°C). Cette méthode permet d'obtenir une omelette prête à être consommée, c'est-à-dire la cuisson de l'omelette fait partie du procédé.

US2016/0143307 divulgue décrit un procédé pour la préparation de gels laitiers par un traitement à haute pression. Selon ce procédé, le traitement à haute pression engendre la formation d'un gel à partir d'un concentré de lait.

EP 1 219 184 divulgue un procédé pour stériliser un produit alimentaire, le procédé comportant un traitement thermique ainsi qu'une suite de plusieurs étapes séparées de traitement à haute pression.

CN101999732 divulgue un traitement à haute pression pulsée de divers sauces et aliments cuits. Selon ce traitement, la pression qui agit sur l'aliment est maintenue sur un niveau diminuée entre deux traitements à haute pression.

Les publications ci-dessus n'évaluent que de manière sommaire l'effet de la pascalisation sur les propriétés gustatives du produit. D'autre part, elles ne permettent pas de tirer des conclusions sur des produits plus complexes, comportant des ingrédients différents, par exemple des produits comportant des assortiments d'ingrédients solides ou secs et d'ingrédients liquides ou aqueuses.

### Résumé de l'Invention

De manière surprenante, le traitement à haute pression, si effectué selon des paramètres définis, a des effets favorables sur certains produits comportant un assortiment, un assortiment et/ou un mélange d'ingrédients. Par exemple, le traitement par haute pression permet de diminuer la population des bactéries indésirables, tout en conservant les bactéries lactiques dont la présence peut être souhaitable. D'autre part, de manière surprenante, les produits de l'invention peuvent subir un traitement allant jusqu'aux alentours de 6'000 bars et même au-delà, sans perdre leurs propriétés organoleptiques. En outre, les inventeurs ont mis en évidence la présence de synergies favorables lorsqu'un produit comportant un produit lacté, tel qu'un fromage, et un liquide alcoolisé et/ou à bas pH est subis au traitement. Le procédé à haute pression de l'invention est particulièrement utile pour traiter les fondues du type prêtes à être utilisées, bien connues sous la dénomination "fix fertig".

Selon un aspect, la présente invention concerne un procédé de traitement par pascalisation d'une fondue.
Selon un aspect, la présente invention concerne un procédé de traitement par pression d'une fondue, par exemple d'une fondue du type prêt à l'emploi et/ou "fix fertig".
Selon un aspect, l'invention concerne un procédé pour augmenter la durée de conservation d'une fondue, le procédé comportant: exposer ladite fondue à au moins un traitement par pression, lors duquel la pression est maintenue continûment entre 4'000 et 8'000 bar pendant une durée de 1 à 10 minutes.
Selon un aspect, l'invention concerne un procédé de traitement par pression d'une fondue, le procédé comprenant: 1) ajouter un ou plusieurs ingrédients comportant au moins un ou plusieurs produits lactés afin d'obtenir ladite fondue; 2) exposer la fondue à au moins un traitement par pression isostatique, lors duquel la pression isostatique est maintenue continûment entre 400-800 MPa [4'000 et 8'000 bar] pendant une durée de 1 à 10 minutes.

Selon un aspect, la présente invention concerne un produit susceptible d'être obtenu par le procédé selon l'invention.

Selon un aspect, la présente invention concerne l'utilisation de la pascalisation pour le traitement d'une fondue.

Selon un aspect, la présente invention concerne une fondue du type prête à être utilisée, ladite fondue ayant été traitée par la pascalisation.

Selon un aspect, la présente invention concerne l'utilisation de la pascalisation pour traiter une fondue prête à être utilisée.

D'autres aspects de l'invention et des modes de réalisation préférés sont définis dans les revendications et dans la description ci-après.

### Description détaillée des modes de réalisations préférés

La présente invention concerne un procédé de traitement par pression, en particulier par pression isostatique. Ce type de traitement par pression est également connu sous le nom de "pascalisation". Conformément à ce procédé, le produit à traiter est généralement immergé dans un liquide, de préférence de l'eau, dans une enceinte adaptée à la pression utilisée. A l'aide d'une pompe à haute pression, le liquide est compressé. Le produit est par conséquent exposé à une pression isostatique. La pression dans le liquide est la même dans toutes les directions, raison pour laquelle la pression est exercée de manière uniforme sur l'ensemble de la surface de l'emballage du produit lors du traitement. Dans la littérature anglophone, ce type de pression est connu sous la dénomination "High Pressure Pasteurization", abrévié par HPP.

Dans un mode de réalisation, le produit alimentaire comporte un assortiment d'ingrédients. Dans le présent descriptif, les expressions "un ensemble d'ingrédients" et "un assortiment d'ingrédients" ont la même signification et peuvent être utilisées de façon interchangeable. Quand les ingrédients sont mélangés, l'on obtient un mélange d'ingrédients, par exemple un mélange d'ingrédients assortis.

L'assortiment d'ingrédients comporte de préférence au moins un ingrédient solide, de préférence sous forme râpée et/ou granuleuse. De préférence, l'ingrédient comporte des morceaux que l'on peut obtenir en râpant, coupant, taillant ou concassant un produit solide, tel, par exemple, un fromage, un légume ou tout autre aliment solide. L'ensemble des morceaux râpés, taillés et/ou concassés donne de préférence le solide sous la forme granuleuse susmentionnée.

Dans le présent descriptif, un produit est considéré comme étant solide s'il est essentiellement solide et/ou non-visqueux à une température de 20°C. Dans le présent descriptif, les solides viscoélastiques, tels que certains fromages, sont considérés comme produits solides.

Un produit viscoélastique, par exemple un aliment viscoélastique, est considéré comme solide viscoélastique si le module élastique (ou module de conservation) G' du matériau est égal ou plus grand que le module visqueux (ou module de perte) G", c'est-à-dire quand G"/G' ≤1. L'unité de G" et G' est Pa. Les valeurs de ces modules sont déterminées à l'aide d'un rhéomètre. Pour la présente invention, le protocole divulgué par B. Colas et al "Comparaison de méthodes dynamiques et transitoire pour la caractérisation du comportement viscoélastique d'analogues de fromages" peut être utilisé (régime dynamique). En bref, le produit est soumis à deux modes de sollicitation (cisaillement plan et annulaire). Pour les deux modes de sollicitation, les mesures ont été effectuées à une fréquence de 1 à 5 Hz et avec une amplitude de déformation de 0.5%. Des essais préliminaires peuvent être nécessaires pour déterminer la plage de viscoélasticité linéaire (LVE) et de vérifier que les traitements thermiques préalables ne modifiaient pas les caractéristiques rhéologiques des produits. Les paramètres G' et G" sont déterminés sur la base d'un ingrédient qui n'est pas râpé, granuleux et/ou coupé en morceaux. Ces paramètres peuvent être déterminés avant que le produit soit râpé et/ou coupé en morceaux afin d'obtenir la forme granuleuse.

Dans un mode de réalisation préféré, un ingrédient est considéré solide lorsque, pendant une exposition à une température de 20°C pendant 30 minutes, il conserve essentiellement sa forme.

Dans un mode de réalisation, l'assortiment d'ingrédients comporte au moins un produit lacté et/ou laitier. De préférence, le produit lacté est un produit fermenté et/ou issu d'un procédé de fermentation lactique.

Dans un mode de réalisation préféré, l'assortiment d'ingrédients comporte au moins un fromage.

Dans un mode de réalisation, le fromage est un fromage à pâte pressée. De préférence, le fromage est choisi parmi les fromages à pâte pressée cuite, tel le gruyère, l'emmenthal, la raclette, le "bergkäse" (fromage de montagne), ou le parmesan, et les fromages à pâte pressées non-cuites, tel le vacherin.

L'assortiment d'ingrédients peut comporter un des deux ou les deux types de fromage. Dans un mode de réalisation, l'assortiment d'ingrédients comporte seulement un ou plusieurs fromages à pâte pressée cuite, mais aucun fromage à pâte pressé non-cuite.

Dans un autre mode de réalisation, l'assortiment d'ingrédients comporte seulement un ou plusieurs fromages à pâte pressée non-cuite, mais aucun fromage à pâte pressé cuite. Encore dans un autre mode de réalisation, l'assortiment d'ingrédients comporte les deux types de fromage.

L'assortiment d'ingrédients peut également comprendre d'autres types de fromage, par exemple des fromages à pâte filée, telle la mozzarella. Dans un mode de réalisation préféré, l'assortiment d'ingrédients ne contient pas du fromage à pâte filée, ou moins de 20% en poids, de préférence moins de 10% en poids du fromage à pâte filée.

Dans le présent descriptif, les pourcentages en poids se réfèrent à l'ensemble de tous les ingrédients comestibles du produit, y compris les ingrédients liquides le cas échéant.

L'assortiment d'ingrédients peut comporter un ou plusieurs fromages à pâte dure et/ou un ou plusieurs fromages à pâte mi-dure.

Le ou les fromages sont de préférence présents sous forme granuleuse comme indiqué ci-dessus, par exemple sous forme de fromage râpé, granulé ou taillé en morceaux. Quand l'assortiment comporte deux ou plus de fromages différents, un, plusieurs ou tous les fromages sont de préférence présents sous ladite forme granuleuse.

Dans un mode de réalisation préféré, ledit produit lacté comporte un fromage à pâte pressé présent sous forme râpée et/ou granuleuse.

Dans un mode de réalisation, l'assortiment d'ingrédients comporte au moins un liquide, de préférence un liquide aqueux. De manière surprenante, les inventeurs ont constaté qu'un traitement par pascalisation comme décrit ci-après est très bien supporté par un produit comportant un assortiment d'ingrédients comportant à la fois un ou plusieurs ingrédients solides et un ou plusieurs liquides aqueux soumis au traitement de pascalisation. De manière totalement inattendue, les propriétés gustatives sont préservées suite au traitement par pascalisation, par exemple suite au stockage du produit traité.

Dans un mode de réalisation, le produit comporte de 5 à 50% en poids, de préférence de 10-40% en poids, encore de préférence de 15-35% en poids, par exemple 20-30% en poids d'ingrédients liquides, c'est-à-dire un liquide aqueux, par exemple une boisson comme décrit ci-après. Le reste du pourcentage (par exemple, 95-50% en poids, etc.) est de préférence constitué par les ingrédients solides du mélange d'ingrédients.

Dans un mode de réalisation, l'assortiment d'ingrédients comporte au moins un liquide aqueux ayant un pH inférieur à 5, de préférence inférieur à 4.5, encore de préférence inférieur à 4. Le liquide acide peut être une boisson ayant l'acidité requise. De préférence, le liquide aqueux a un pH entre 2.6 et 3.9. Les inventeurs ont constaté que dans un assortiment d'ingrédients comportant à la fois un ingrédient solide ainsi qu'un ingrédient liquide et acide, la pascalisation permet d'augmenter la durée de conservation de manière importante. Vraisemblablement, le traitement de la pascalisation conformément à l'invention et la présence concomitante d'un liquide acide dans le produit engendrent un effet synergique qui se manifeste en une durée de conservation nettement plus longue, comparée aux situations où la pascalisation n'a pas lieu ou le liquide acide est omis.

Dans un mode de réalisation, l'assortiment d'ingrédients comporte au moins un liquide alcoolisé, de préférence une boisson alcoolisée. Dans un mode de réalisation, la boisson comporte entre 4 et 50vol.% d'alcool, de préférence entre 5-40vol.%, encore de préférence entre 10-20vol.% d'alcool. De manière similaire à ce qui a été décrit par rapport à la présence d'un liquide acide, la présence d'un liquide comportant de l'alcool agit en synergie avec le traitement à haute pression, de façon à augmenter de manière significative la durée de conservation du produit comportant l'assortiment d'ingrédients. La présence d'alcool semble contribuer à l'effet de synergie entre le traitement par haute pression et le liquide acide.

Dans un mode de réalisation, ladite boisson alcoolisée peut être du vin et/ou une boisson spiritueuse, par exemple, une eau de vie, telles les eaux de vies obtenues à partir de fruits (kirsch, poire, prune, pomme), les eaux de vie de marcs, le rhum, le whiskey, les eaux de vie de vin (cognac, armagnac, rakia, ...), la grappa, la vodka ou la téquila.

Dans un mode de réalisation préféré, la boisson alcoolisée est du vin, de préférence du vin blanc.

Dans un mode de réalisation, l'assortiment d'ingrédients comporte plusieurs ingrédients liquides, par exemple plusieurs boissons alcoolisées différentes, par exemple du vin blanc et une eau de vie. Dans un autre mode de réalisation, l'assortiment d'ingrédients comporte une boisson alcoolisée, par exemple du vin blanc, et une autre boisson non-alcoolisée. Dans encore un autre mode de réalisation, l'assortiment d'ingrédients comporte un ou plusieurs liquides ou boissons qui ne contiennent pas ou très peu d'alcool. Par exemple, le liquide peut être un jus de fruits.
Dans un mode de réalisation, ledit mélange d'ingrédients comporte entre 10-40% en poids dudit liquide aqueux lorsqu'il est soumis à la haute pression selon l'invention, par exemple selon l'étape 2) du procédé conformément à un mode de réalisation de l'invention.
De préférence, ledit mélange d'ingrédients comporte entre 15-35% en poids dudit liquide alcoolisé, encore de préférence entre 20-30% en poids, par exemple 23-27% en poids. Les autres ingrédients (par exemple, 65-85% en poids, etc.) sont de préférence des ingrédients solides du mélange d'ingrédients. De préférence, ledit liquide est du vin blanc.

Selon l'invention, ledit mélange d'ingrédients et/ou ledit produit alimentaire est une fondue, de préférence une fondue prête à être utilisée. Dans le présent descriptif, les expressions "prête à être utilisé", "prête à l'emploi", "prête à utiliser" et "fix fertig" sont utilisées de manière interchangeable.
Une fondue contient généralement un ou plusieurs fromages râpés ou taillés en morceaux et mélangés, formant un assortiment ou mélange granuleux plus ou moins homogène. Les fromages sont de préférence choisis parmi les fromages décrits ci-dessus, ou dans les exemples ci-après. De manière surprenante, le traitement par haute pression d'un fromage râpé permet d'augmenter la durée de conservation du produit en éliminant les bactéries non-souhaitées, tout en conservant une présence importante des bactéries lactiques.
Dans un mode de réalisation préféré, ledit produit comportant un assortiment d'ingrédients est une fondue prête à être utilisée et/ou prête à l'emploi. Les fondues de ce type sont également connues sous la désignation allemande "fix fertig". Ces fondues contiennent généralement tous les ingrédients nécessaires pour préparer la fondue afin qu'elle puisse être consommée. Il suffit généralement de chauffer la fondue "fix fertig" et de la remuer pour la préparer. A part un ou plusieurs fromages râpés ou taillés en morceaux, la fondue "fix fertig" contient généralement du vin blanc et de la fécule, par exemple, la fécule de céréales ou de pommes de terre. Typiquement, la fécule de maïs (par exemple, maïzena®) peut être utilisée. Bien entendu, c'est au choix du consommateur d'ajouter ou non un ou plusieurs autres ingrédients selon les préférences personnelles, par exemple des épices, par exemple du poivre et/ou de l'ail, ou encore du Kirsch, lors de la préparation, par exemple. Un ou plusieurs de ces ingrédients peuvent également être présents dans la fondue "fix fertig". En général, les fondues laissent beaucoup de choix aux niveaux des ingrédients additionnels qui peuvent être ajoutés. A titre d'exemple, l'on peut citer les fondues au fromage aux tomates, aux bolets, ou aux truffes, par exemple. La fondue "fix fertig" de l'invention peut ou non comporter d'autres ingrédients.

Le rôle du vin blanc dans une fondue est en soi connu. Les composants suivants du vin blanc sont considérés jouer un rôle plus ou moins important: les sels minéraux, les acides, l'eau et l'alcool. Les sels minéraux, tels que l'acide tartrique (ou bitartrate de potassium), contribuent à la fonte des fromages: Elles cassent les ponts de calcium qui relient les protéines entre elles, leur permettant de se séparer, par exemple pour se repartir dans le vin. Les acides secondent les sels minéraux dans leur rôle de démolisseurs de ponts de calcium. L'eau sert à hydrater et à diluer les protéines de fromage une fois qu'elles sont séparées. L'alcool permet de dissoudre une partie des matières grasses du fromage.

Dans une fondue "fix fertig", il serait en principe possible de remplacer le vin blanc par un liquide comportant au moins les sels minéraux et de préférence un ou plusieurs des autres ingrédients susmentionnés. Cependant, l'utilisation de vin blanc dans une fondue "fix-fertig" est préférée.

Les fromages préférés pour une fondue, y compris une fondue "fix fertig" ont été discutés ci-dessus ou dans les exemples ci-après. Ces indications concernent spécifiquement le cas d'une fondue, par exemple d'une fondue "fix fertig". Par exemple, dans les exemples ci-après, le traitement par haute pression des fondues "fix fertig" comportant un assortiment de fromages à pâte pressée cuite, typiquement des fromages à pâte dure, a donné des résultats surprenants.

Dans un mode de réalisation, l'assortiment d'ingrédients, et en particulier la fondue, comporte un ou plusieurs fromages choisis parmi: le gruyère, l'emmenthal, la raclette, le "bergkäse" (fromage de montagne), le parmesan et, optionnellement, le vacherin. De préférence, l'assortiment d'ingrédients comporte au moins deux, encore de préférence au moins trois fromages différents. De préférence, l'assortiment d'ingrédients comporte au moins deux ou au moins trois, par exemple au moins 4 fromages à pâte dure cuite différents.

Certaines fondues disponibles dans le commerce contiennent tous les ingrédients solides, c'est-à-dire tous les ingrédients nécessaires pour préparer la fondue à l'exception du vin, qui doit encore être ajouté au moment de la préparation. Par exemple, ces fondues comportent un ou plusieurs fromages et la fécule dans les bonnes proportions. Ces fondues sont également couvertes par l'invention conformément à un mode de réalisation. Dans un autre mode de réalisation, ce type de fondues "fix fertig", dans lesquelles le vin est absent, est exclu selon l'invention.

Conformément à un mode de réalisation préféré, le procédé de l'invention comprend une étape dans laquelle les ingrédients sont ajoutés. Plus précisément, les ingrédients sont combinés, c'est-à-dire, mis ensemble afin de former l'assortiment comportant des ingrédients différents. Cette étape ne comporte pas nécessairement un mélange, même si un tel mélange, par exemple des ingrédients solides, est préféré. Les ingrédients liquides peuvent généralement être ajoutés en versant le liquide sur les ingrédients solides, ou vice versa. L'ordre dans lequel les ingrédients sont ajoutés n'est généralement pas important. Dans un mode de réalisation préféré, l'assortiment des ingrédients (liquides et solides) est mélangé, afin d'obtenir un mélange d'ingrédients homogène et/ou régulier avant de procéder au traitement à haute pression. Dans ce cas, l'assortiment d'ingrédients est un mélange d'ingrédients. Bien entendu, dans un mélange comportant un ou plusieurs ingrédients solides et un ou plusieurs ingrédients liquides, le ou les ingrédients liquides ne forment pas nécessairement un mélange homogène avec le ou les ingrédients solides. Au contraire, le ou les ingrédients liquides peuvent être séparés des ingrédients solides, même quand les ingrédients sont mélangés.

Il convient de préciser que le produit est emballé avant qu'il soit exposé au traitement à haute pression. Le produit est de préférence emballé dans un sac, sachet ou autre emballage en plastique souple, qui est essentiellement imperméable à l'eau. Dans un mode de réalisation, l'emballage est un emballage flexible ou semi-flexible. Dans un mode de réalisation, le procédé de l'invention comporte une étape d'emballage des ingrédients du produit. L'emballage est de préférence compressible, permettant de transmettre la pression au contenu de l'emballage de façon isostatique. Le liquide ne peut pas traverser l'emballage lors du traitement à haute pression.

Conformément à un mode de réalisation préféré, le procédé de l'invention comprend une étape dans laquelle l'assortiment d'ingrédients (emballé) est exposé à un traitement par pression, lors duquel la pression est maintenue continûment entre 4'000 et 8'000 bar pendant une durée de 1 à 10 minutes.

Les expressions "maintenue continûment" et "durée continue" indiquent que, conformément à la présente invention, la pression est maintenue sans interruption pendant la durée en question à l'intérieur des valeurs de pression indiquées. C'est de préférence seulement avant ou après la durée en question que la pression appliquée est inférieure (ou supérieure) aux valeurs définies par la fourchette de pression. Par exemple, dans un mode de réalisation dans lequel la pression est maintenue entre 4'000 et 8'000 bars et la durée du traitement est fixé à 5 minutes, la pression reste constamment supérieure à 4000 bars pendant les 5 minutes, mais elle ne dépasse pas les 8'000 bars.

La présente invention prévoit que, pendant la durée en question, la pression puisse varier à l'intérieur de la fourchette de pression indiquée. Par exemple, conformément à un mode de réalisation, l'assortiment d'ingrédients est exposé pendant une durée continue de 5 minutes à une pression pouvant varier entre 4000 à 8000 bars.

Dans un mode de réalisation, l'assortiment d'ingrédients n'est de préférence pas exposé à une pression supérieure à la valeur limite supérieure de la fourchette en question pendant une durée significative. Pour le présent descriptif, une durée significative est une durée représentant 20% ou plus de la durée du traitement, de préférence 10% du temps de la durée du traitement.

Dans un mode de réalisation, la valeur limite supérieure n'est pas dépassée pendent plus de 1 minute, c'est-à-dire, elle peut être dépassée pendant 0-60 secondes, de préférence pendant 0-30 secondes, encore de préférence pendant 0-15 secondes. 60 secondes correspondent à 20% d'un traitement d'une durée de 5 minutes, par exemple.

Les indications ci-dessus prennent compte du fait que la pression peut varier pendant le traitement, par exemple, en raison des limites techniques de l'équipement utilisé. Pour ces raisons, la présente invention n'exclut pas totalement la possibilité qu'une valeur de limite supérieure soit dépassée pendant une durée non-significative, par exemple pendant quelques secondes.

Cependant, dans un mode de réalisation préféré, la pression reste à l'intérieure des valeurs limites inférieure et supérieure pendant l'ensemble de la durée du traitement selon l'invention.

Conformément à la présente invention, la durée continue pendant laquelle la pression est maintenue entre les valeurs définies dans le présent descriptif représente généralement la durée d'un cycle de traitement par pression. La présente invention envisage également que le produit et/ou l'assortiment d'ingrédients est exposé à plusieurs cycles de traitement par pression. Si tel est le cas, il est préféré qu'au moins un des cycles est conforme aux indications de la présente l'invention. Le ou les cycles supplémentaires peuvent être conformes aux indications du présent descriptif ou différents. Par exemple, lors du ou des cycles supplémentaires, la pression peut être différente des valeurs précisées dans le présent descriptif, et/ou la durée du traitement peut être plus longue ou plus courte qu'indiquée dans le présent descriptif.

Pour effectuer le traitement par pascalisation, le produit emballé peut être immergé dans un liquide, généralement de l'eau, dans une enceinte adaptée à la haute pression. Aujourd'hui, plusieurs fabricants commercialisent des appareillages permettant d'effectuer ce type de traitement. Un appareil de l'entreprise AVURE Technologies, utilisé pour les essais décrit dans la section ci-après, peut être cité à titre d'exemple.

Dans un mode de réalisation préféré, lors dudit traitement par pression, ladite pression est maintenue entre 5'000 et 7'000 bar et appliquée pendant une durée continue de 2 à 9 minutes, de préférence 3 à 8 minutes, encore de préférence de 4 à 7 minutes, par exemple de 4 minutes et quelques secondes à 7 minutes.

Dans un mode de réalisation, la durée du traitement par pression est supérieure à 4 minutes, par exemple 4 minutes et 10 secondes ou plus, de préférence à 4 minutes et 20 secondes ou plus, 4 minutes et 30 secondes ou plus, encore de préférence 4 minutes et 40 secondes ou plus. Ces durées minimales de plus de 4 minutes s'appliquent de préférence aux divers modes de réalisation de l'invention décrits ci-dessus et ci-après, lorsque mention est fait de "et quelques secondes".

Dans un mode de réalisation préféré, lors dudit traitement par pression, ladite pression est maintenue entre 5'500 et 6'500 bar et appliquée pendant une durée continue de 2 à 9 minutes, de préférence 3 à 8 minutes, encore de préférence de 4 à 7 minutes, par exemple de 4 minutes et quelques secondes à 7 minutes.

Dans un mode de réalisation préféré, lors dudit traitement par pression, ladite pression est maintenue entre 5'750 et 6'250 bar et appliquée pendant une durée continue de 3 à 8 minutes, de préférence 4 et quelques secondes à 7 minutes, encore de préférence de 4 et quelques secondes à 6 minutes.

Dans un mode de réalisation préféré, lors dudit traitement par pression, ladite pression isostatique est maintenue entre 5'850 et 6'150 bar et appliquée pendant une durée continue de 3 à 8 minutes, de préférence 4 et quelques secondes à 7 minutes, encore de préférence de 4 et quelques secondes à 6 minutes.

Dans un mode de réalisation préféré, lors dudit traitement par pression, ladite pression isostatique est maintenue entre 5'900 et 6'100 bar, de préférence 5'950 à 6'050 bar et appliquée pendant une durée continue de 3 à 8 minutes, de préférence 4 et quelques secondes à 7 minutes, encore de préférence de 4 et quelques secondes à 6 minutes.

De préférence, la durée est de 5 minutes. De préférence, la pression ciblée est d'environ 6'000 bar, qui est maintenue pendant la période, mais peut varier pour des raisons techniques de ±100 bars lors de la période de traitement.

Les durées et pressions indiquées ci-dessus se réfèrent plus particulièrement à la durée pendant laquelle une pression particulière et ciblée est maintenue dans les limites imposées par l'installation (par exemple, ±100 bars). Le temps pendant lequel la pression monte jusqu'à ce que la pression ciblée soit atteinte n'est pas compris dans ces délais, ni le temps pendant lequel la pression descend à la pression ambiante. La montée de la pression a généralement lieu selon un barème prédéfini, par exemple entre 30-200 bars par seconde, de préférence de 40 à 100 bars par seconde. Par exemple, pour atteindre 6'000 bars à 60 bars/seconde, il faudrait 100 secondes pour atteindre la pression ciblée. La détente de la pression est généralement beaucoup plus rapide, par exemple moins d'une minute, de préférence moins de 30 secondes et encore moins de 15 secondes. Ces délais ne sont pas compris dans les durées indiquées ci-dessus, ces dernières concernant de préférence la durée pendant laquelle l'installation est programmée pour maintenir une pression ciblée définie par l'utilisateur.

La présente invention présente plusieurs avantages inattendus. Selon les connaissances des inventeurs, la présente invention constitue la première application d'un traitement à haute pression à des mélanges d'ingrédients comportant des ingrédients solides et liquides, et la première application à des ingrédients granuleux et/ou découpé en petits morceaux, tel le fromage râpé, par exemple. Une observation surprenante selon l'invention, est que des pressions relativement élevées, aux alentours des 6'000 bars peuvent être appliquées sans que les propriétés organoleptiques de tels produits soient diminuées.

Une autre observation surprenante concerne le fait que le traitement par haute pression permet de diminuer et/ou supprimer les bactéries non-désirées, tout en gardant une population importante des bactéries lactiques. Le procédé de l'invention permet de diminuer la population des bactéries indésirables de manière sélective. Les bactéries indésirables sont essentiellement les bactéries non-lactiques, par exemple les entérobactéries, per exemple *E. coli*, les salmonelles, les listérias, les staphylocoques, et éventuellement d'autres bactéries non-lactiques.

D'autre part, la présence de bactéries lactiques et du milieu acide peut contribuer à la stabilité du produit et ainsi à la durée de conservation. Dans le cas du produit comportant des bactéries lactiques, on observe une synergie inattendue entre le contenu et/ou les propriétés du produit et le traitement par haute pression.

De manière surprenante également, la présence d'un liquide acide et/ou alcoolisé, telle une boisson alcoolique, n'a pas d'effet négative sur les propriétés du produit mais, au contraire, peut contribuer à la synergie qui permet d'augmenter la durée de conservation.

Dans le cas d'une fondue du type "fix fertig", une stabilisation des propriétés organoleptiques a été observée suite au traitement par haute pression selon l'invention et suite au stockage du produit, par exemple pour une durée de 110 jours à une température d'environ 10°C.

Dans un mode de réalisation, le procédé de l'invention permet de conserver, stabiliser et/ou de préférence améliorer les propriétés organoleptiques du produit alimentaire comportant un assortiment d'ingrédients. Des effets surprenants sur les propriétés gustatives ont été observés chez le produit traité par pression selon l'invention, par exemple même suite au stockage du produit traité par pression.

Dans un mode de réalisation de l'invention, le procédé comporte en outre une étape 3) de stockage du produit traité par haute pression pendant une durée de 10 à 200 jours de préférence entre 30 et 160 jours, encore de préférence entre 60 et 140 jours, par exemple entre 100 et 120 jours à une température de 0.5 à 15°C, de préférence 2-11°C, encore de préférence à 10°C. Il convient de noter que 10°C représente une température de stockage relativement élevée.

De manière surprenante, la méthode selon l'invention permet de prolonger la durée de conservation du produit alimentaire. Grâce à l'invention, il est possible d'utiliser une date limite de consommation (DLC) qui est ultérieure par rapport à la DLC d'un produit comparatif ayant les mêmes ingrédients, la même date de fabrication et les mêmes conditions de stockage, mais le produit comparatif n'ayant pas été soumis au traitement de pression conformément à l'invention. Dans un mode de réalisation, la durée de conservation est prolongée d'au moins 30 jours, de préférence d'au moins 45 jours, encore de préférence d'au moins 60 jours.

La durée de conservation d'un produit du type fondue "fix fertig" obtenue conformément au procédé de l'invention peut être de 3 mois ou plus à partir de la fabrication, de préférence de 4 mois ou plus, de préférence de 5 mois ou plus et encore de préférence de 6 mois ou plus à partir de la fabrication, c'est-à-dire à partir de l'étape de traitement par haute pression. Ces durées de conservation s'appliquent de préférence à des températures pouvant aller jusqu'à 10 ou 11°C. De préférence, la durée de conservation s'applique à une température de stockage entre 3-10°, de préférence 4-9°C.

### Exemples

La présente étude concerne un procédé de traitement isostatique haute pression pour augmenter la durée de vie d'une fondue prête à l'emploi ou "fix fertig", composée de fromages, ingrédients en poudres et liquides.

La fondue est traitée dans son emballage primaire définitif avec un barème temps-pression.

Ce traitement à très haute pression est opéré à température ambiante permettant le maintien de la fraîcheur naturelle et les qualités organoleptiques de la fondue d'origine. Le traitement est appliqué sur des fondues conditionnées dans un emballage souple, susceptibles de transmettre à leur contenu la pression appliquée.

### 1. Matériels et méthodes

### 1.a. Equipement

L'équipement utilisé pour les essais de traitement par hautes pressions est une installation conçue par AVURE Technologies, le modèle AV-10. L'enceinte présente un volume de 100 L adapté à des essais allant de quelques échantillons à une production industrielle de 300 à 500 kg/h. Le système de pressurisation fonctionne selon un mode indirect: après introduction des produits dans l'enceinte, celle-ci est remplie d'eau. Un système de pompage et d'augmentation de la pression permet de forcer l'entrée d'eau dans l'enceinte jusqu'à atteindre la pression ciblée. L'appareil est équipé d'un système de régulation automatique de la pression, ce qui permet de programmer un barème classique de traitement: montée en pression (jusqu'à 65 bars par seconde), maintien de la pression, puis une détente (<5 s).

### 1.b. Protocoles

Différents barèmes ont été testés. Les paramètres sont résumés dans le Tableau 1 ci-dessous, dans lequel des données issues des différents cycles sont regroupées.

**Tableau 1: Détail des deux barèmes appliqués lors des essais à haute pression**

| Désignation | Pression appliquée (en bar) | | Temps | Température initiale |
|---|---|---|---|---|
| | Min | Max | | |
| Barème n°1 | 5966 | 6081 | 300 s | 11 °C |
| Barème n°2 | 4974 | 5063 | 300 s | 11,5 °C |

La température initiale représente la température de l'eau dans l'enceinte avant pressurisation. Lors de la montée en pression, une augmentation de température est observée du fait de la compression (environ + 2-3°C tous les 1000 bars). Dans le cas d'un traitement qui débute à 11°C, la température pendant le traitement est donc d'environ 30°C. L'augmentation de température est réversible, puisqu'à la détente, la température retrouve son niveau initial (ici 9°C).

### 1.c. Produits testés (fondues)

Les produis testés sont les suivants:
Référence: Fondue Moitié-Moitié Mifroma à 24 jours
Recette: Vacherin (1/2), Gruyère (1/2).

Ce produit ne contient ni vin ni fécule, car l'ajout de ses ingrédients se fait au moment de la préparation de la fondue pour la consommation. Il ne s'agit pas d'un produit prêt-à-l'emploi ("fix fertig"). Ce produit n'a pas été traité par haute pression, mais n'est utilisé que pour les analyses sensorielles.

Produit N° 1 : Fondue "fix fertig" du type Moitié-Moitié, commandé spécifiquement chez un fournisseur en quantité faible. Il s'agit d'un produit industriel.
Recette : Vacherin, Gruyère, vin blanc, fécule.

Produit N°2: Fondue Cavern "fix fertig"
Recette: 73% fromages (¼ raclette, ¼ gruyère, ¼ bergkäse, ¼ emmentaler), 25.5 % Vin blanc, 1.5% fécule du type maïzena®.

Produit N°3: Fondue Cavern "fix fertig", dont 20% chutes emmental + sel de fonte (Joha® Tneu).
Recette: 72.8% fromages (¼ raclette, ¼ gruyère, ¼ bergkäse, 1/8 emmentaler, 1/8 chutes emmentaler), 25.5 % Vin blanc, 1.5% fécule type maïzena®, 0.2% Sel de fonte.

Produit N°4: Fondue Moitié-Moitié Mifroma "fix fertig" homogène, produit en interne. Recette: 73% Fromages (50% Vacherin Fribourgeois+50% Gruyère), 25.5 % Vin blanc, 1.5% Fécule du type maïzena®. Les ingrédients ont été mélangés jusqu'à ce qu'une pâte homogène se forme. Le produit est ensuite rempli dans des sacs en plastique.

En résumé, le produit 1 est préparé par un fournisseur extérieur par un procédé industriel. En revanche, les produits 2-3 sont des fondues "prête-à-l'emploi" produites de façon industrielle, mais en faibles quantités. Enfin, le produit 4 est préparé "en cuisine" par les inventeurs en petite quantité, dans des conditions artisanales. Le produit a un aspect et la constitution d'une pâte et se distingue de ce fait également des produits 1-3.

### 1.d. Analyses microbiologiques

Des analyses microbiologiques ont été effectuées avant le traitement à haute pression, après le traitement (J0), ainsi qu'à différents intervalles de temps de stockage à 10°C 30 jours, 90 jours et 150 jours. Ces temps de stockage représentent des dates limite de consommation (DLC) cible.

À chaque intervalle de temps, les flores suivantes ont été analysées :
- Flore mésophile aérobie à 30 °C
- Flore lactique
- Entérobactéries
- Staphylocoques à coagulase +

En plus, des analyses de Listeria monocytogenes, Salmonella et Escherichia coli ont été demandées avant traitement à haute pression, et le jour du traitement. Chaque résultat résulte d'une analyse faite sur un pool de 3 échantillons.

### l.e. Analyses sensorielles

Une étude hédonique des différents essais (90, 110 et 150 jours après le traitement HP) face à une référence fraiche du marché âgée de 24 jours a été menée. Les résultats obtenus permettent de comparer les acceptances des produits traitées face à l'acceptance d'une fondue fraiche et d'ainsi de définir une potentielle date limite de consommation (DLC).

Trente (30) sujets naïfs du produit « fondue » ont participé aux tests dans des box individuels et ont enregistré leurs réponses à l'aide du logiciel Fizz de Biosystèmes. Les échantillons étaient codés et distribués de manière aléatoire, anonyme et monadique (un produit après l'autre). Les sujets avaient la possibilité de goûter le fromage avec du pain ou tel quel, à leur convenance. Ils étaient également invités à se rincer régulièrement la bouche avec de l'eau. Les sujets n'ont pas été exactement les mêmes pour les tests effectués à des intervalles différents, c'est-à-dire que le groupe de sujets qui a effectué les analyses à 90 jours, par exemple, n'était pas constitué des mêmes personnes du groupe qui a effectué les analyses à 110 jours et encore à 150 jours.

L'évaluation gustative de chaque échantillon se faisait par rapport à une échelle hédonique à 9 points allant de 1 = «je trouve que ce produit est extrêmement mauvais» à 9 = «je trouve que ce produit est extrêmement bon». Les dégustateurs avaient l'opportunité de justifier leur notation en laissant un commentaire. Un questionnaire préliminaire invitait les participants à renseigner leur tranche d'âge, leur sexe et leur fréquence de consommation de fondues à des fins de traitement statistique.

### 2. Résultats et discussion

### 2.a. Résultats microbiologiques

Dans les Tableaux 2 à 5 ci-dessous, les résultats sont exprimés en UFC/g et le stockage a eu lieu à 10°C.

### i. Produit 1

Les résultats des différentes analyses sont reportés dans le Tableau 2 ci-dessous. Les analyses à J120 avec le barème 5000 n'ont pas été effectuées du fait des résultats à J90.

**Tableau 2: Résultat des analyses microbiologiques pour le produit n°1**

| | **AV HP** | **5000 bars** | **6000 bars** | **5000 bars** | **6000 bars** | **5000 bars** | **6000 bars** | **6000 bars** |
|---|---|---|---|---|---|---|---|---|
| | J0 | J0 | J0 | J30 | J30 | J90 | J90 | J120 |
| **FMA** | 3 000 000 | 4300 | 250 | 7600 | 2300 | 23000000 | 23000 | 13000 |
| **Bact. Lact.** | 1 500 000 | 1500 | <10 | 1700 | 1900 | 13000000 | 14000 | 590 |
| **Entérobact.** | <10 | <10 | <10 | <10 | <10 | <10 | <10 | <10 |
| **E. coli** | <10 | <10 | <10 | X | X | X | X | X |
| **Staph. Coag.** | <10 | <10 | <10 | <10 | <10 | <10 | <10 | <10 |
| **Salmonella** | ABS | ABS | ABS | X | X | X | X | X |
| **Listeria** | ABS | ABS | ABS | X | X | X | X | X |

| | | | | | | | | |
|---|---|---|---|---|---|---|---|---|
| FMA : Flore mésophile aérobie. ABS : absence. Un X symbolise que les analyses n'ont pas été menées. | | | | | | | | |

Les résultats sur le produit n°1 montrent que le barème à 6000 bars est bien plus efficace, que ce soit immédiatement ou bien au cours du stockage. En effet, on remarque une diminution immédiate à J0 de 3 log UFC/g de la flore mésophile avec le barème de 5000 bars par rapport à un produit non traité, tandis qu'avec le barème à 6000 bars, la réduction logarithmique est de 4 log UFC/g sur cette flore. À J90, la différence se retrouve entre les deux barèmes: le produit traité à 6000 bars présente une contamination inférieure de près de 3 log UFC/g en flore mésophile aérobie.

### ii. Produit 2

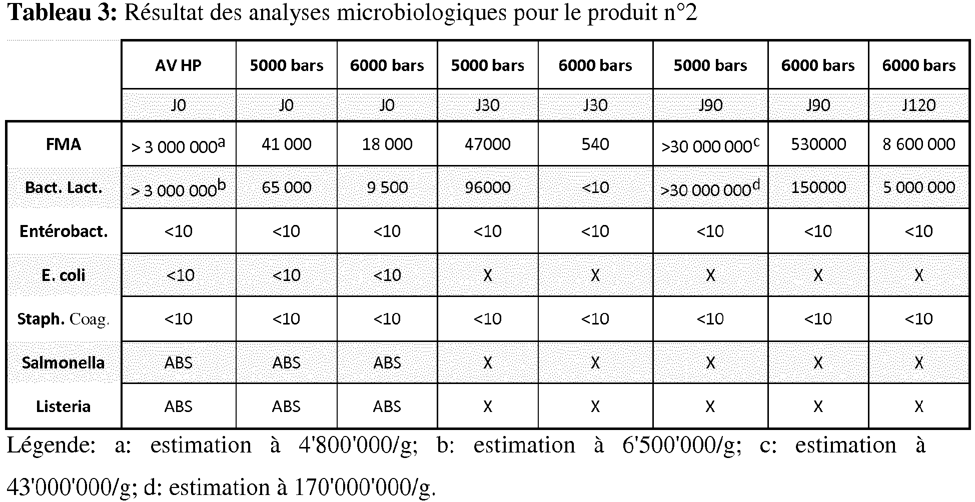

Le produit n°2 était déjà bien plus contaminé que le produit n°1, avant traitement. Bien que le traitement à 6000 bars ait été, une fois de plus, plus efficace, il n'a pas pu ralentir suffisamment la croissance des bactéries que ce soit par rapport à la flore mésophile aérobie ou plus particulièrement par rapport aux bactéries lactiques. Les résultats dépassent 6 log UFC/g (flore lactique et flore mésophile) à 120 jours avec un barème de 6000 bars.

### iii. Produit 3

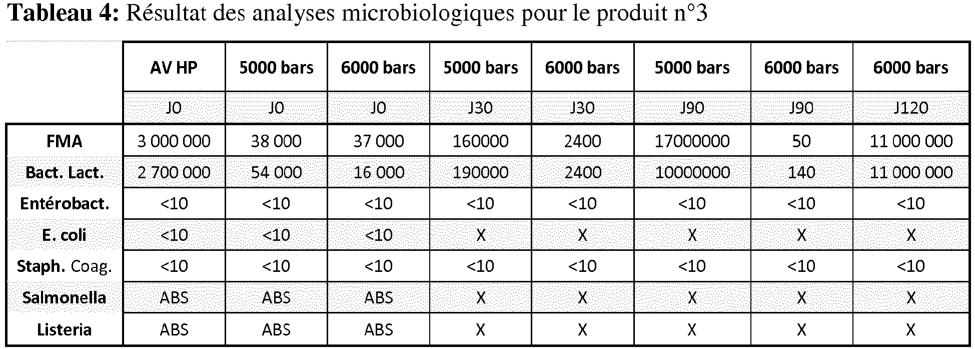

De la même façon que pour les autres produits, le traitement à 6000 bars a été le plus efficace. Le niveau de contamination initiale a été retrouvé à J90 avec le barème à 5000 bars, tandis qu'il a fallu atteindre 120 jours de stockage pour obtenir les mêmes niveaux de contamination. Ce type de résultats montre typiquement l'intérêt des hautes pressions dans le ralentissement des croissances de bactéries endogènes, c'est-à-dire naturellement présent dans le fromage (typiquement des bactéries lactiques).

### iv. Produit 4

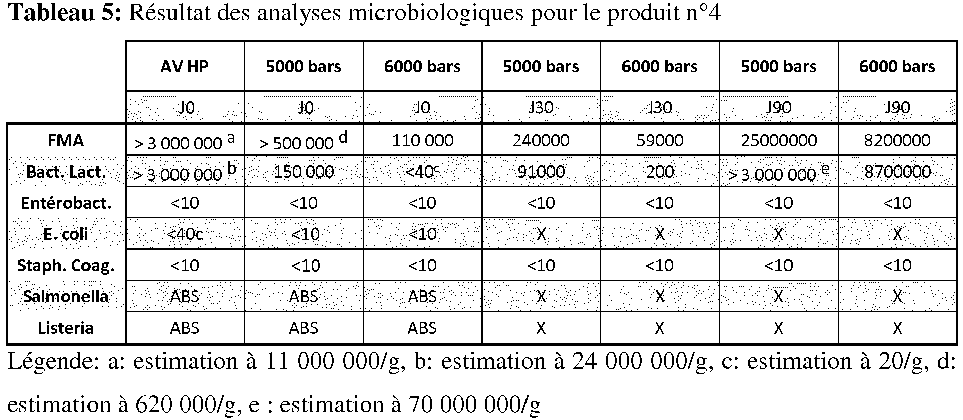

Le barème à 6000 bars a été le plus satisfaisant, une fois encore. Cependant, la reprise de croissance a été relativement rapide pour la flore mésophile sur les deux barèmes, puisqu'à 90 jours, les produits présentaient les mêmes niveaux de contamination, quel que soit le barème. La croissance des bactéries lactiques est également notable, notamment à partir de 30 jours.

### 2.b. Résultats analyses sensorielles

### i. Tests à 90 jours

Les produits qui ont été testé sont la fondue de référence à 24 jours et les produits 2-4 à 90 jours suite au traitement HP (le produit 1 n'a pas été testé). Les résultats sont montrés dans le Tableau 6.

**Tableau 6: Données brutes et signification statistique du test à J+90**

| | Référence | Produit N°2 | Produit N°3 | Produit N°4 |
|---|---|---|---|---|
| Note mini | 3 | 2 | 1 | 1 |
| Note maxi | 9 | 8 | 8 | 8 |
| Etendue des notes | 6 | 6 | 7 | 7 |
| Moyenne | 6.07 | 5.53 | 5.2 | 4.73 |
| Coeff. Var. (%) | 25.59 | 26.74 | 34.03 | 42.23 |
| Groupe (signif 5%) | **A** | AB | AB | **B** |

Ces résultats indiquent que la référence obtient la plus haute moyenne d'acceptance à 6.07 (= "je trouve ce produit plutôt bon"). C'est aussi celle qui obtient la note minimum la plus haute et dont la variation des résultats est la plus faible. A l'opposé, le produit 4 obtient une moyenne sous 5, indiquant un produit plutôt mauvais. La note minimale de 1 lui a été attribué et la variation des résultats est très importante. Les lettres définissent les groupes dans lesquels s'inscrivent les produits, une lettre commune indique qu'il n'existe pas de différence significative entre les acceptances tandis qu'une lettre différente indique une différence d'acceptance significative avec 5% de risque. Il en ressort que la fondue N°4 est significativement dépréciée par rapport à la référence tandis que les essais N°2 et N°3 s'inscrivent entre les 2, sans appréciation significativement différente.

Ce test met en avant le fait que les fondues N°2 et N°3 semblent avoir bien conservé leurs propriétés organoleptiques, malgré le traitement et le temps, lui permettant de pouvoir être directement comparée en terme d'acceptance avec une fondue de référence. En effet, dans leur intégralité ou quelle que soit la population étudiée, les résultats de ces deux produits ne sont jamais significativement différents.

En revanche, la fondue N°4 obtient systématiquement les notes les plus basses et est significativement moins appréciée par rapport à la fondue de référence. Ce résultat s'explique sans doute par sa consistance particulière et très gommeuse, relevée de nombreuse fois dans les commentaires.

A J+90 jours de production, la fondue N°2 pourrait sans soucis être mise sur le marché face à une fondue de référence et serait tout autant appréciée. En revanche, il n'est pas nécessaire de poursuivre le suivi avec la fondue N°4 dans la mesure où elle ne tient déjà pas la concurrence avec une fondue de référence, que ce soit à cause d'une date déjà trop longue ou à cause d'un traitement inadapté altérant les qualités du produit à la base.

### ii. Tests à 110 jours

**Tableau 7: Données brutes et signification statistique du test à J+110**

| | Produit N°2 | Produit N°3 |
|---|---|---|
| Note mini | 3 | 3 |
| Note maxi | 8 | 9 |
| Etendue | 5 | 6 |
| **Moyenne** | **6.03** | **5.80** |
| Coeff. Var. (%) | 23.97 | 24.67 |
| Groupe | Non significatif | Non significatif |

Ces résultats indiquent que les produits sont sensiblement perçus de la même manière par l'ensemble de la population. Les deux moyennes étant très proches, la différence d'acceptance n'est pas significative. La fondue N°3 présente une variation plus importante de ses notes, celles-ci allant de 3 à 9. A 110 jours, la fondue N°2 jours obtient une moyenne similaire à celle de la fondue de référence à 24 jours. Il est à noter que les deux versions dégustées à 90 et 110 jours sont dans les deux cas mieux notées dans leur version âgée (à 110 jours).

### iii. Tests à 150 jours

**Tableau 8: Données brutes et signification statistique du test à J+150**

| | Produit N°2 | Produit N°3 |
|---|---|---|
| Note mini | 4 | 3 |
| Note maxi | 8 | 8 |
| Etendue | 4 | 5 |
| **Moyenne** | **5.60** | **5.52** |
| Coeff. Var. (%) | 24.72 | 23.46 |
| Groupe | Non significatif | Non significatif |

Cette évaluation indique que les produits sont sensiblement perçus de la même manière par l'ensemble de la population. Les deux moyennes étant très proches, la différence d'acceptance n'est pas significative. Il ressort de ces résultats que la fondue N°2, bien qu'elle ne soit pas significativement plus appréciée que la version N°3, est tout de même l'échantillon qui obtient le plus de notes égales ou supérieures à 7 et même aucune note inférieure ou égale à 3. Tandis que l'autre version rassemble plus de notes moyennes ou mauvaises, inférieures et égales à 6.

### iv. Synthèse

**Tableau 9: Récapitulation des données brutes des Tableaux 6-8**

| | Référence 24 j | N°2 90 j | N°3 90 j | N°4 90 j | N°2 110 j | N°3 110 j | N°2 150 j | N°3 150 j |
|---|---|---|---|---|---|---|---|---|
| Nombre de participants | 30 | 30 | 30 | 30 | 35 | 35 | 25 | 25 |
| Note mini | 3 | 2 | 1 | 1 | 3 | 3 | 4 | 3 |
| Note maxi | 9 | 8 | 8 | 8 | 8 | 9 | 8 | 8 |
| Etendue | 6 | 6 | 7 | 7 | 5 | 6 | 4 | 5 |
| **Moyenne** | **6.07** | **5.53** | **5.2** | **4.73** | **6.03** | **5.8** | **5.6** | **5.52** |
| Coeff. Var. (%) | 25.59 | 26.74 | 34.03 | 42.23 | 23.97 | 24.67 | 24.72 | 23.46 |
| Groupe* | **A** | **AB** | **ABC** | **C** | **A** | **AB** | **AB** | **ABC** |

La fondue N°2 à 110 jours obtient une moyenne similaire à celle de la fondue de référence à 24 jours. Viennent ensuite les produits N°3 à 110 et 150 jours et les fondues N°2 à 90 et 150 jours qui présentent des moyennes comprises entre 5.5 et 5.8. En fin de classement se trouvent la N°3 à 90 jours avec une moyenne de 5.2 et l'essai N°4 à 90 jours, l'échantillon le moins apprécié, qui obtient la note de 4.73. Les 2 versions N°2 et 3 se sont vues mieux notées à 110 jours qu'à 90 jours mais que cette tendance s'est ensuite inversée puisqu'à 150 jours les produits ont à nouveau obtenus des moyennes similaires à celles obtenues à 90 jours.

Deux grands groupes se démarquent dans ces résultats. Le premier est composé des 2 produits avec les meilleures moyennes: la fondue de référence et l'essai N°2 à 110 jours. Ces 2 échantillons sont perçus comme significativement meilleurs à 95% que les fondues d'un second groupe composé des version N°2 à 90 jours et N°3 à 90 jours. Les autres produits pourraient être qualifiés d'intermédiaires. En effet, les fondues N°2 à 90j et 150j ainsi que la N°3 à 150j avec leurs lettres AB ne se distinguent pas significativement du groupe 1 mais sont seulement significativement plus appréciées que la N°4 à 90j. Tandis que la N°3 à 150j avec ses lettres ABC n'est pas significativement plus appréciée ou dépréciée qu'un autre produit testé.

### 3. Conclusion

D'un point de vue microbiologique, les différentes analyses ont montré que chaque produit se comporte de façon différente par rapport aux hautes pressions. En outre, l'intérêt de monter jusqu'à 6000 bars a été prouvé sur ces produits, fortement contaminés.

Les tests mettent en avant le fait qu'à 150 jours, les fondues N°2 et 3 sont perçues de la même manière. Pour les fondues N°2 et 3, les moyennes obtenues par les produits, testés à 90, 110 et 150 jours, démontrent également que les produits sont plus appréciés à l'âge intermédiaire de 110 jours pour ensuite revenir à une acceptance plus basse à 150 jours, mais pas inférieure à celles obtenues à 90 jours.

Concernant l'ensemble de l'étude et des produits, il est important de rappeler que la fondue de référence obtient toujours la moyenne d'appréciation la plus élevée de tous les échantillons mais fait également partie du même groupe de tête que la fondue N°2. Ces 2 produits sont significativement préférés à 95% aux 2 produits en fin de classement.

Pour conclure, nous observons qu'un traitement HPP est pertinent pour allonger la date d'une fondue "fix fertig". Il est établi que la fondue N°2 à 110 jours tient parfaitement la comparaison avec une fondue de référence de 24 jours mais aussi que des fondues à 150 jours ne sont pas significativement moins appréciées que ces 2 produits en tête, permettant de pouvoir fixer une date à 150 jours si besoin.

## Revendications

1. Procédé de traitement par pression d'un produit alimentaire comportant une fondue, le procédé comprenant:
1) ajouter un ou plusieurs ingrédients comportant au moins un ou plusieurs produits lactés afin d'obtenir ladite fondue;
2) exposer la fondue à au moins un traitement par pression lors duquel la pression est maintenue continûment entre 400-800 MPa [4'000 et 8'000 bar] pendant une durée de 1 à 10 minutes.

2. Le procédé selon la revendication 1, **caractérisé en ce que** ladite fondue comporte tous les ingrédients solides nécessaires pour préparer la fondue afin qu'elle puisse être consommée.

3. Le procédé selon l'une quelconque des revendications 1 à 2, **caractérisé en ce que** ladite fondue comporte une boisson alcoolisée.

4. Procédé selon la revendication 3, **caractérisé en ce que** ladite boisson alcoolisée est du vin, en particulier du vin blanc.

5. Procédé selon l'une quelconque des revendications de 3 à 4, **caractérisé en ce que** ladite fondue comporte entre 10-40% en poids de ladite boisson alcoolisée lorsqu'elle est soumise à l'étape 2).

6. Procédé selon l'une quelconque des revendications précédentes, **caractérisé en ce que** ledit produit lacté est un produit fermenté et/ou issu d'un procédé de fermentation lactique.

7. Procédé selon l'une quelconque des revendications précédentes, **caractérisé en ce que** ledit produit lacté est un fromage à pâte pressée présent sous forme râpée, coupée en morceaux et/ou granuleuse.

8. Procédé selon l'une quelconque des revendications précédentes, **caractérisé en ce que** ladite fondue est une fondue prête à être utilisée.

9. Procédé selon l'une quelconque des revendications précédentes, **caractérisé en ce que**, lors dudit traitement par pression, ladite pression est maintenue continûment entre 500 et 700 MPa [5'000 et 7'000 bar], pendant une durée de 2 à 8 minutes, de préférence 3 à 7 minutes.

10. Procédé selon l'une quelconque des revendications précédentes, **caractérisé en ce que**, lors dudit traitement par pression ladite pression est maintenue continûment entre 550 et 650 MPa [5'500 et 6'500 bar] pendant une durée de 3 à 7 minutes, de préférence 4 minutes et 30 secondes à 6 minutes.

11. Produit alimentaire susceptible d'être obtenu par le procédé selon l'une quelconque des revendications de 1 à 10.

12. Utilisation de la pascalisation pour le traitement d'une fondue.

13. Utilisation selon la revendication 12, **caractérisé en ce que** ladite fondue est une fondue du type prête à être utilisée et/ou prête à l'emploi ("fix-fertig").

## Patentansprüche

1. Verfahren zur Behandlung mit Druck eines Nahrungsmittelprodukts, das ein Fondue enthält, wobei das Verfahren umfasst:
1) Hinzufügen von einem oder mehreren Inhaltsstoffen, umfassend mindestens ein oder mehrere Milchprodukte, um das besagte Fondue zu erhalten;
2) Aussetzen des Fondues mindestens einer Behandlung mit Druck, bei welcher der Druck kontinuierlich zwischen 400-800 MPa [4.000 und 8.000 bar] während einer Dauer von mindestens 1 bis 10 Minuten gehalten wird.

2. Das Verfahren nach Anspruch 1, **dadurch gekennzeichnet, dass** das besagte Fondue alle festen Inhaltssstoffe enthält, die zur Zubereitung des Fondues notwendig sind, damit es konsumiert werden kann.

3. Das Verfahren nach einem der Ansprüche 1 bis 2, **dadurch gekennzeichnet, dass** das besagte Fondue ein alkoholisches Getränk enthält.

4. Verfahren nach Anspruch 3, **dadurch gekennzeichnet, dass** es sich bei dem besagten alkoholischen Getränk um Wein handelt, insbesondere um Weißwein.

5. Verfahren nach einem der Ansprüche 3 bis 4, **dadurch gekennzeichnet, dass** das besagte Fondue zwischen 10-40 Gewichtprozente des besagten alkoholischen Getränks enthält, wenn es dem Schritt 2) ausgesetzt wird.

6. Verfahren nach einem der vorstehenden Ansprüche, **dadurch gekennzeichnet, dass** das besagte Milchprodukt ein fermentiertes Produkt ist und/oder aus einem Verfahren zur Milchgärung stammt.

7. Verfahren nach einem der vorstehenden Ansprüche, **dadurch gekennzeichnet, dass** das besagte Milchprodukt ein Hartkäse ist, der in geriebener, in Stücke geschnittener und/oder granulierter Form vorhanden ist.

8. Verfahren nach einem der vorstehenden Ansprüche, **dadurch gekennzeichnet, dass** das besagte Fondue ein gebrauchsfertiges Fondue ist.

9. Verfahren nach einem der vorstehenden Ansprüche, **dadurch gekennzeichnet, dass**, bei der besagten Behandlung mit Druck, der besagte Druck kontinuierlich zwischen 500 und 700 MPa [5.000 und 7.000 bar] während einer Dauer von 2 bis 8 Minuten, vorzugsweise von 3 bis 7 Minuten, gehalten wird.

10. Verfahren nach einem der vorstehenden Ansprüche, **dadurch gekennzeichnet, dass**, bei der besagten Behandlung mit Druck, der besagte Druck kontinuierlich zwischen 550 und 650 MPa [5.500 und 6.500 bar] während einer Dauer von 3 bis 7 Minuten, vorzugsweise von 4 Minuten und 30 Sekunden bis 6 Minuten, gehalten wird.

11. Nahrungsmittelprodukt, welches durch das Verfahren nach einem der Ansprüche 1 bis 10 erhalten werden kann.

12. Verwendung der Pascalisation für die Behandlung eines Fondues.

13. Verwendung nach Anspruch 12, **dadurch gekennzeichnet, dass** das besagte Fondue ein Fondue vom Typ gebrauchsfertig und/oder fix-fertig ist.

## Claims

1. Pressure treatment process of a food product comprising a fondue, the process including:
1) the addition of one or more ingredients comprising at least one or more milk products in order to obtain the said fondue;
2) the exposure of the fondue to at least one pressure treatment during which the pressure is maintained continuously between 400-800 MPa [4,000 and 8,000 bar] for a period of 1 to 10 minutes.

2. The process according to claim 1, **characterised in that** the said fondue comprises all the solid ingredients necessary to prepare the fondue so that it can be consumed.

3. The process according to any one of the claims 1 and 2, **characterised in that** the said fondue comprises an alcoholic beverage.

4. The process according to claim 3, **characterised in that** the said alcoholic beverage is wine, in particular white wine.

5. Process according to any one of the claims 3 to 4, **characterised in that** the said fondue comprises between 10% and 40% by weight of the said alcoholic beverage when it is subjected to step 2).

6. Process according to any one of the preceding claims, **characterised in that** the said milk product is a fermented product and / or the result of a lactic fermentation process.

7. Process according to any one of the preceding claims, **characterised in that** the said milk product is a pressed cheese present in a form which is grated, cut into pieces and/or granulated.

8. Process according to any one of the preceding claims, **characterised in that** the said fondue is a fondue which is ready for use.

9. Process according to any one of the preceding claims, **characterised in that** at the time of the said pressure treatment the said pressure is continuously maintained between 500 and 700 MPa [5,000 and 7,000 bar] for a period of 2 to 8 minutes, preferably 3 to 7 minutes.

10. Process according to any one of the preceding claims, **characterised in that** at the time of the said pressure treatment the said pressure is continuously maintained between 550 and 650 MPa [5,500 and 6,500 bar] for a period of 3 to7 minutes, preferably 4 minutes and 30 seconds to 6 minutes.

11. Food product obtainable by the process according to any one of the claims 1 to 10.

12. The use of pascalisation for the treatment of a fondue.

13. The use according to claim 12, **characterised in that** the said fondue is a fondue of the type ready to be used and/or ready for use ("fix/fertig").
